**Europäisches Patentamt**

**European Patent Office**

**Office européen des brevets**

(11) Veröffentlichungsnummer: **0 275 458 B1**

(12) **EUROPÄISCHE PATENTSCHRIFT**

(45) Veröffentlichungstag der Patentschrift: **04.11.92**

(21) Anmeldenummer: **87118191.3**

(22) Anmeldetag: **08.12.87**

(51) Int. Cl.⁵: **A47L 1/00**, H02J 7/34, H02J 7/32

(54) **Verwendung von Wind- und/oder Solarenergie zur Reinigung von Flächen, beispielsweise Fenster oder Solarkollektorflächen.**

(30) Priorität: **08.12.86 DE 3641912**

(43) Veröffentlichungstag der Anmeldung:
**27.07.88 Patentblatt  88/30**

(45) Bekanntmachung des Hinweises auf die
Patenterteilung:
**04.11.92 Patentblatt  92/45**

(84) Benannte Vertragsstaaten:
**CH DE ES FR GB IT LI**

(56) Entgegenhaltungen:
**EP-A- 0 017 225**
**DE-A- 2 440 196**
**DE-A- 3 346 773**
**US-A- 4 228 362**

(73) Patentinhaber: **Ries, Andreas**
**Von-Salza-Strasse 60**
**W-6990 Bad Mergentheim(DE)**

(72) Erfinder: **Ries, Andreas**
**Von-Salza-Strasse 60**
**W-6990 Bad Mergentheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Wind- und/oder Solarenergie zur Reinigung oder Reinhaltung von Flächen.

Durch die DE-OS 29 13 087 sind bereits Vorrichtungen zum Reinigen oder Reinhalten von lotrechten oder mit einer lotrechten Komponente versehenen Flächen beispielsweise Fenster von Hochhäusern und Solarkollektorflächen bekannt geworden.

Ferner ist durch die DE-A-3 346 773 eine Vorrichtung zum Betreiben einer Wind-Solar-Energienutzungsanlage, die zum aufladen eines elektrischen Speichers benutzt werden kann, bekannt.

Bei den eingangs genannten Vorrichtungen gemäß dem Oberbegriff des Anspruchs 1 werden ein oder mehrere Sprühdüsen, insbesondere Oszillatordüsen am oberen Rand der zu reinigenden Fläche angeordnet. Die Düsen sind über eine Pumpe an eine Flüssigkeitsquelle für Reinigungsflüssigkeit angeschlossen, die über eine Auffangvorrichtung am unteren Ende der Fläche und einen Filter in einem Kreislauf zu den Düsen zurückgeführt werden kann. Die Verwendung von sogenannten fluidischen Oszillatordüsen hat sich dabei als besonders vorteilhaft herausgestellt. Dabei ist zum Antrieb der Pumpen elektrische Energie erforderlich, die über das herkömmliche elektrische Stromnetz überall leicht zur Verfügung steht.

Aufgabe der Erfindung der eingangs genannten Art ist es, die bekannten Vorrichtungen in einer Weise zu verbessern, daß sie weitgehend unabhängig von dem Stromnetz selbsttätig arbeiten.

Die Aufgabe wird erfindungsgemäß mit den kennzeichnenden Merkmalen des Anspruches 1 gelöst.

Vorteilhafte Ausführungen und Weiterbildungen nach der Erfindung ergeben sich aus den Merkmalen der Unteransprüche.

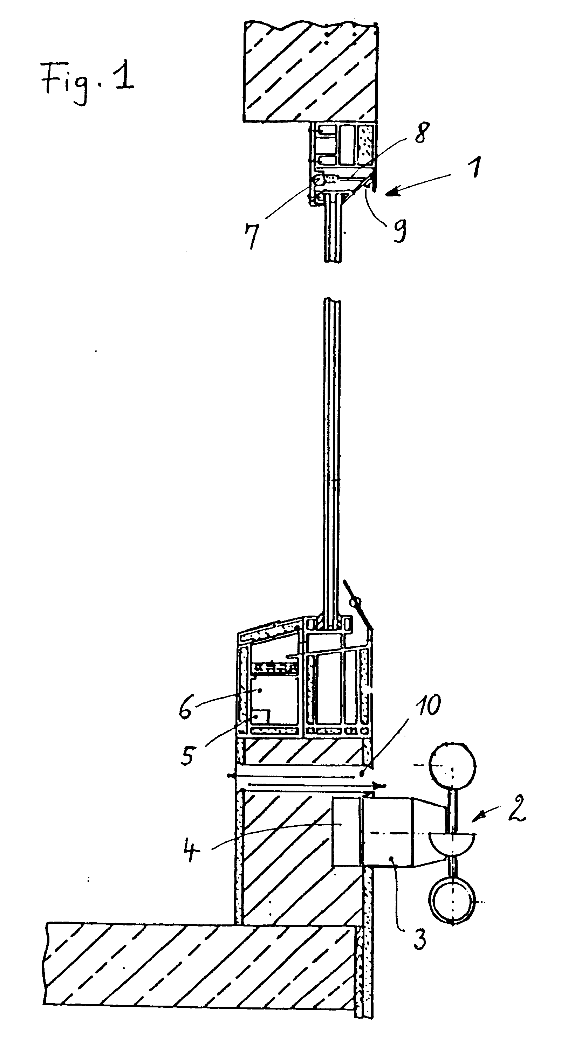

Die Erfindung wird anhand eines ersten Ausführungsbeispieles beschrieben. Die zugehörige schematische Zeichnung (Fig. 1) zeigt eine Fensterreinigungsvorrichtung 1, die erfindungsgemäß mit einer Windantriebsvorrichtung 2 in Verbindung steht, welche einen Generator 3 antreibt, der eine Batterieeinheit 4 lädt. Die Batterie 4 ist über nicht dargestellte elektrische Kabel mit einer Pumpe 5 Verbunden, die sich hier z.B. in dem Flüssigkeitssammelraum 6 befindet, um die Flüssigkeit über eine nicht dargestellte Rohrleitung im seitlichen Fensterrahmen in die Verteilerleitung 7 im kopfseitigen Rahmenteil des Fensterrahmens zu pumpen, die über Anschlußrohre 8 an fluidische Düsen 9 angeschlossen sind. Die Windantriebsvorrichtung 2 besteht hier, ohne jede Beschränkung, beispeilsweise aus einem Schaufelrad an einer Welle, die mit den Rotor des Generators 3 verbunden ist. Es ist dem Fachmann ohne weiteres klar, daß das Schaufelrad durch jede andere geeignete Art von Windrädern ersetzt sein kann, wobei auch die vielfältigen Erfahrungen aus dem Turbinen- und Flugzeugbau zur Verfügung stehen.

Im Beispielsfalle ist die Windantriebsvorrichtung an der Gebäudeaußenwand gehalten. Erfindungsgemäß kann das Windrad entsprechend den vorhandenen Gegebenheiten in einem geeigneten Abstand und Winkel zur Gehäuseaußenwand oder auch in besonders eingerichteten Gebäudenischen oder Gebäudewandausnehmungen angeordnet sein, um die wandnahen Windströmungen, insbesondere bei Hochhäusern, optimal ausnutzen zu können. Sofern an der Außenwand eines Gebäudes Fassaden angehängt sind, können die Windräder erfindungsgemäß auch in den belüfteten Zwischenräumen wettergeschützt angeordnet sein.

Insbesondere bei Hochhäusern kann ein Druckausgleich zwischen dem Druck in gebäudeinneren Räumen und dem schwankenden Druck der äußeren Umgebung des Gebäudes von großer Wichtigkeit sein. Erfindungsgemäß ist die Windantriebsvorrichtung 2 derart angeordnet, daß die Luftströmung in dem Druckausgleichskanal das dem Kanal entsprechend angepaßte Windrad der Windantriebsvorrichtung 2 beaufschlagt. Es ist klar, daß hierzu das Windrad dieser Windströmung besonders angepaßt und gegenüber dieser besonders ausgerichtet sein muß, so daß die Windantriebsvorrichtung 2 sowohl vom Außenwind als auch von der Luftströmung in dem Druckausgleichskanal oder nur von dieser Luftströmung beaufschlagt sein kann. Dem Fachmann ist auch ohne weiteres verständlich, daß der Kanal 10 auch so ausgebildet sein kann, daß die Windantriebsvorrichtung 2, insbesondere das Windrad weitgehend geschützt innerhalb dieses Kanals angeordnet werden kann. Das Windrad kann dann auch nur oder im wesentlichen nur von der Luftströmung in einem besonders erweiterten Kanalabschnitt des Kanals 10 beaufschlagt sein, doch kann diese Luftströmung bereits ausreichen, um durch die Bewegung des Windrades innerhalb des erweiterten Kanalabschnittes eine ausreichende Strommenge zur erzeugen, damit die Batterie zum Betrieb der elektrischen Pumpe im wesentlichen geladen bleibt, was besonders dann keine Schwierigkeiten bereitet, wenn die Pumpe z.B. nur in größeren Zeitabständen und dann nur relativ kurze Zeit läuft, während das Windrad insbesondere bei den ständig vorhandenen Windströmungen an Außenfassaden von Hochhäusern praktisch nicht zur Ruhe kommt und die Batterie somit ständig geladen wird. Es ist klar, daß die Batterie mit einer elektronischen Überladungsschutzschaltung versehen sein kann. Auch läßt sich schaltungstechnisch berücksichtigen, daß die Windantriebsvorrichtung je nach der Strömungs- bzw. Windrichtung vorwärts oder rückwärts laufen kann. Um die vorhandenen Windströmungen an Gebäudeaußenwänden und/oder in den die Gebäudenaußenwände durchdringenden Druckausgleichskanälen erfindungsgemäß optimal ausnutzen zu können, kann es besonders vorteilhaft sein, die die vorhandenen Windströmungen dem Windrad optimal zuzuleiten. Dem Fachmann ist klar, daß sich Wetterschutzblenden zum Schutz der Windräder vorsehen lassen, die die Windströmungen vom Antrieb der Windräder im wesentlichen unbeeinträchtigt lassen.

Die Erfindung betrifft auch die Verwendung der Solarenergie im Bereich der zu reinigenden oder reinzuhaltenden Fläche. In diesem Zusammenhang können zusätzlich zu der Windantriebsvorrichtung oder allein wenigstens ein an sich bekanntes Solarladegerät an die Batterie 4 angeschlossen sein. Die Solarkollektorflächen dieses Gerätes können an der Gebäudeaußenwand in der Nähe des Fensters angeordnet sein.

Die Solarladegeräte können vor allem bei ruhigen Schönwetterlagen mit geringen Windströmen die mangelnde Ladefähigkeit der Windantriebsvorrichtung ausgleichen.

Es ist klar, daß die Erfindung nicht auf die Ladung von Batterien zum Antrieb der Pumpen beschränkt ist. So kann der von den Windantriebsvorrichtungen und/oder von Solarstromgeräten erzeugte Strom auch direkt zum Antrieb von elektrischen Pumpen verwendet werden.

Weiterhin können erfindungsgemäß elektrische Schaltungen in den Schaltkreisen zwischen den Wind- und Solarstromgeneratoren und den elektrischen Pumpen vorhanden sein, die die überschüssige elektrische Energie, die zeitweise nicht zum Antrieb der Pumpen bzw. zum Aufladen der Batterien für die Pumpen benötigt wird, automatisch an andere Stromverbraucher, z.B. zur Gewinnung von Warmwasser anschließt.

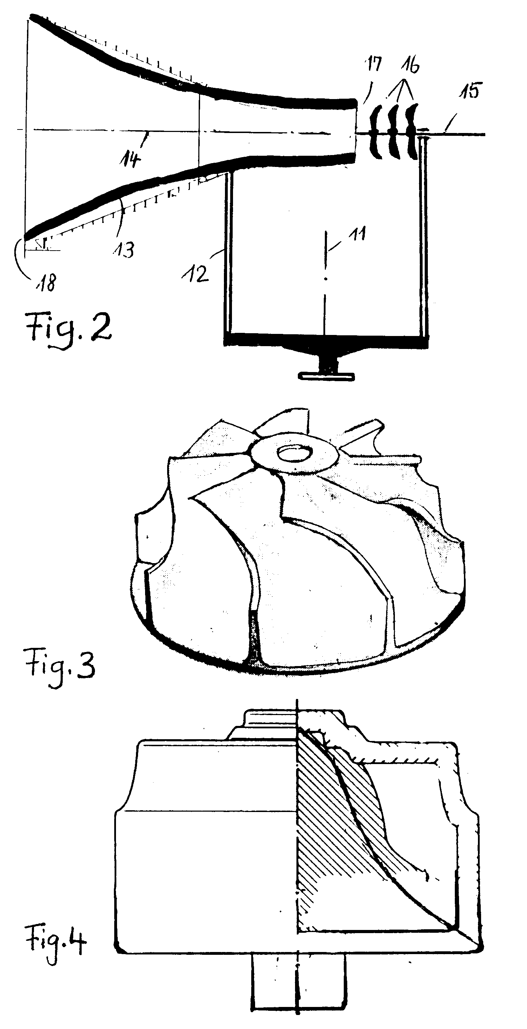

Figur 2 zeigt eine weitere erfindungsgemäße Ausführung zur Erzeugung zum Antrieb von elektrischen Einrichtungen zum Betrieb von Reinigungsvorrichtungen an Fenstern, vorzugsweise Hochhausfenstern, die nicht geöffnet werden können.

Die Stromerzeugungsvorrichtung (Windkraftmaschine) besteht aus einer um eine senkrechte Achse 11 drehbaren Halterungseinrichtung 12 für eine trichterförmige Windleitvorrichtung 13 und eine in der Längsachse 14 der Windleitvorrichtung 13 liegende Antriebswelle 15 für einen nicht dargestellten Generator. Auf der Antriebswelle 15 sind im Beispielsfalle drei freiliegende Propellerblätter 16 angebracht, die nach dem engquerschnittigen Austrittsende 17 der trichterförmigen Windleitvorrichtung 13 angeordnet sind. Die drehbare Halterung 12 ist zusammen mit der Windleitvorrichtung 13 und der Welle 15 mit den Propellerblättern 16 durch einen nicht dargestellten Stellmotor derart verdrehbar, daß die trichterförmige Windleitvorrichtung 13 stets in die jeweilige vorherrschende Windrichtung des vorhandenen Windes an oder auf einem Gebäude weist. Damit die trichterförmige Windleitvorrichtung stets in die richtige Lage gedreht ist, in der die große Öffnung am Eintrittsende 18 der Windleitvorrichtung 13 der jeweils vorherrschenden Windströmung genau entgegengerichtet ist, ist mindestens ein an sich bekannter, in der Zeichnung nicht dargestellter Windrichtungssensor vorhanden, der die jeweils vorherrschende Windrichtung bestimmt und ein dem momentan veränderten Richtungswinkel der Windrichtung entsprechendes elektrisches Signal an den Motor zur Verdrehung der Halterungseinrichtung 12 abgibt, in der die trichterförmige Windleitvorrichtung 13 in die vorherrschende Windrichtung gedreht ist.

Die trichterförmige Windleitvorrichtung 13 ist vorzugsweise düsenförmig ausgebildet. Vorteilhafterweise besitzt die Windleitvorrichtung 13 die Konfiguration einer Laval'schen Düse.

Auf der Welle 15 kann jede beliebige Anzahl von Propellerblättern 16 fest angeordnet sein. So kann bereits ein Propellerblatt ausreichend sein. Je nach den vorhandenen Verhältnissen wird die optimale Anzahl der Propellerblätter in einem Versuch festgelegt. Hierbei spielt die durchschnittlich vorhandene Windenergie und die Ausbildung der Windleitvorrichtung eine wesentliche Rolle. Ein besonders guter Wirkungsgrad bei der Umsetzung der Windenergie der durch die Windleitvorrichtung eingefangenen und auf die Propellerblätter 16 geleiteten Windströmung in Drehenergie der Welle 15 zum Antrieb eines Generators bzw. Dynamomaschine wird dann erreicht, wenn der freie Innendurchmesser am Austrittsende 17 der Windleitvorrichtung etwa 2m beträgt und die Propellerblätter 16 mit etwa gleichem Durchmesser auf der Welle 15 dicht hinter dem Austrittsende angeordnet sind. Besonders vorteilhaft ist die Kombination einer laval-düsenartigen Windleitvorrichtung mit als Türkensäbel bezeichneten Propellerblättern, die mit der Welle 15 ein sogenanntes Propeller-Fan-Triebwerk bilden. Propeller-Fan-Triebwerke, die auch als Propfan-Triebwerke bezeichnet werden, sind in der Luftfahrttechnik zum Antrieb von Flugzeugen bekannt. Bei mehreren Propellerblättern weisen diese vorzugsweise den gleichen Durchmesser auf.

Die konventionelle Reinigung von Hochhausfenstern verursacht bekanntlich außerordentliche Kosten. Die Erfindung schafft hier Abhilfe, indem wenigstens eine erfindungsgemäße Stromerzeugungseinrichtung, wei sie beispielsweise in Fig. 2 gezeigt ist, auf dem Dach eines Hochhauses angeordnet wird, um den Strom zum Betrieb der Pumpen der einzelnen fluidischen Reinigungsvorrichtungen an den Fenstern zur Verfügung stellen zu können. Bekanntlich stehen auf Hochhausdächern praktisch zu jederzeit erhebliche Windkräfte zur Verfügung, die bisher ungenutzt blieben.

Es wäre zwar naheliegend gewesen, auf Hochhausdächern zur elektrischen Energieerzeugung aus der vorhandenen Windenergie mehrere herkömmliche Windkraftmaschinen zu installieren, die aus drei sternförmig angeordneten Rotorblättern auf einer horizontalen Welle zum Antrieb eines Generators bestehen. Derartige Windkraftmaschinen sind auf sogenannten Windfarmen vor allem in den USA in Einsatz. Nachteilig ist bei diesen bekannten Windkraftmaschinen, daß sie bei hohen Windgeschwindigkeiten, wie sie häufig auch bei normalem Wetter auf Hochhäusern auftreten, sehr stör-und verschleißempfindlich sind. Bei sturm- und orkanartigen Windverhältnissen werden die herkömmlichen Windkraftmaschinen leicht beschädigt. Es müssen deshalb aufwendige Vorrichtungen vorhanden sein, die beim Überschreiten einer bestimmten Windgeschwindigkeit die Welle mit dem Rotorblättern festhält. Die erfindungsgemäße Windkraftmaschine aus einer trichterförmigen Windleitvorrichtung und mindestens einem freien Propellerblatt auf einer Generatorwelle in der Achse der Windleitvorrichtung bietet dagegen den wesentlichen Vorteil, auch bei höheren orkanartigen Windgeschwindigkeiten, wie sie häufig auf Hochhausdächern angetroffen werden, noch einwandfrei zu funktionieren. Selbstverständlich kann es auch hier zweckmäßig sein, an der Welle eine an sich bekannte Überdrehsicherung anzubringen, die aber weit weniger zum Einsatz kommt als bei den bekannten zu Windfarmen zusammengestellten dreiflügeligen Windkraftmaschinen.

Vorteilhafterweise sind die erfindungsgemäßen Windkraftmaschinen auf Hochhausdächern so angeordnet, daß sie von der warmen Hochhausabluftströmung umspült sind. Hierdurch wird der wesentliche Vorteil erzielt, daß die erfindungsgemäßen Windkraftmaschinen im Winter praktisch nicht vereisen und frei von Schneebehindermengen bleiben. Allein die Erkenntnis, daß die erfindunsgemäßen Windkraftmaschinen auf Hochhausdächern sich leicht so installieren lassen, daß sie auch im Winter keinen Beeinträchtigungen durch Schnee und Frost ausgesetzt sind, hat ihren Einsatz auch in nördlichen Breitengraden erst zum Durchbruch verholfen. Auf diese Weise kann die erhebliche Hochhausabluftwärme, die bisher nutzlos ins Freie abgelassen werden mußte, sinnvoll dafür eingesetzt werden, die erfindungsgemäße Windkraftmaschine winterfest zu erhalten. Es kann vorteilhaft sein, auf einem Hochhausdach Strömungsleitbleche oder dergleichen anzuordnen, die die warme Hochhausabluft auf die Windkraftmaschine leitet.

Bekanntlich treten an Rändern von flachen Hochhausdächern ständig beachtliche Windströmungen auf, die erfindungsgemäß zur Stromgewinnung genutzt werden können. So können zusätzlich zu den erfindungsgemäßen Windkraftmaschinen beispielsweise nach Fig. 2 entlang den Hochhaussimsen Schaufelwindräder installiert werden, die auf Wellen angebracht sind, welche Dynamo-Maschinen antreiben. Solche Schaufelwindräder vorzugsweise aus Aluminium sind an sich bekannt. Eine Ansicht und eine teilweise Schnittansicht ist in den Fig. 3 und 4 dargestellt. Derartige Schaufelwinddräder werden im Winter durch Schnee praktisch nicht behindert, da sie sich beim Drehen vom Schnee selbst befreien. Die Schaufelwindräder können vorteilhafterweise einen Durchmesser von 2m aufweisen.

**Patentansprüche**

1. Vorrichtung (1) zur Reinigung oder Reinhalten von lotrechten oder mit einer lotrechten Komponente versehenen und der Verschmutzung durch die Atmosphäre ausgesetzten Flächen, beispielsweise Fensterscheiben oder Solarkollektorflächen wobei eine elektrische Pumpe den, zum Betrieb von über Leitungen mit der Pumpe an eine Flüssigkeitsquelle angeschlossenen, am oder nahe dem oberen Rand der Flächen angeordneten fluidischen Düsen (9) zur Abgabe von gegen die Flächen gerichteten Reinigungssprühstrahlen, notwendigen Flüssigkeitsdruck erzeugt, dadurch gekennzeichnet, daß die Pumpe durch eine Batterieeinheit angetrieben wird, wobei die Batterieeinheit mit durch Windenergie, mittels Windkraftmaschine die die Welle eines Generators antreibt, erzeugten Strom und/oder mit durch Solarenergie erzeugtem Strom aufgeladen wird, daß die Windkraftmaschine aus einer um eine senkrechte Achse drehbaren Halterungseinrichtung (12) besteht, die eine trichterförmige Windleitvorrichtung (13) und eine Längsachse (15) für einen Generator mit wenigstens einem auf der Antriebswelle (15) festgehaltenen Propellerblatt (16) nahe dem engquerschnittigen Austrittsende (17) der Windleitvorrichtung (13) trägt wobei die Halterungseinrichtung mit einem von Windrichtungssensoren gesteuerten Drehantrieb versehen ist, der die Halterungseinrichtung automatisch in eine Stellung dreht, in der die Windleitvorrichtung (13) mit ihrem großquerschnittigen Einlaßende (18) in die vorherrschende Windrichtung gedreht ist.

2. Vorrichtung nach Anspruch 1 dadurch gekennzeichnet, daß in der Nähe der zureinigenden oder reinzuhaltenden Flächen wenigstens ein Solarladegerät in Verbindung mit der Batterieeinheit für den Antrieb der elektrisch betriebenen Pumpe angeordnet ist.

3. Vorrichtung nach Anspruch 1, dadurch gekennzeichnet, daß die zu reinigende oder reinzuhaltende Fläche eine Fenster oder eine Solarkollektorfläche an der Außenfassade einer Gebäudewand ist, wobei die Windkraftmaschine von der am Gebäude auftredenden Luftströmung beaufschlagt ist.

4. Vorrichtung nach Anspruch 1, dadurch gekennzeichnet, daß Windkraftmaschine aus einer um eine senkrechte Achse drehbaren Halterungseinrichtung besteht, die eine trichterförmige Windleitvorrichtung und eine in der Längsachse der Windleitvorrichtung liegende Antriebswelle für einen Generator mit wenigstens einem auf der Antriebswelle festgehaltenen Propellerblatt trägt.

5. Vorrichtung nach Anspruch 1 und 4, dadurch gekennzeichnet, daß die Windleitvorrichtung nach Art der Lavel'schen Düse ausgebildet ist, wobei wenigstens ein Propellerblatt zur Windbeaufschlagung aus der Windleitvorrichtung nahe dem Düsenaustritt angeordnet ist.

6. Vorrichtung nach Anspruch 4 oder 5, dadurch gekennzeichnet, daß das Propellerblatt nach der Propfan-Technik ausgebildet ist und zusammen mit der Windleitvorrichtung Propeller-Fan-Triebwerk bildet.

7. Vorrichtung nach einem der vorstehenden Ansprüche 1 bis 6, dadurch gekennzeichnet, daß auf der Welle mehrere Propellerblätter mit Abstand voneinander angeordnet sind.

8. Vorrichtung nach Anspruch 7, dadurch gekennzeichnet, daß die Propellerblätter gleiche Durchmesser aufweisen.

9. Vorrichtung nach Anspruch 1 und 4 dadurch gekennzeichnet, daß die Windkraftmaschine auf dem Dach eines Hochhauses angeordnet ist.

10. Vorrichtung nach Anspruch 9, dadurch gekennzeichnet, daß eine oder mehrere Windkraftmaschinen derart auf einem Hochhausdach angeordnet sind, daß sie unmittelbar in der Hochhausabluftwärmeströmung liegen.

11. Vorrichtung nach Anspruch 10, dadurch gekennzeichnet, daß auf dem Hochhausdach Strömungsleitvorrichtungen installiert sind, die dieHochhausabluftwärmeströmung gegen die Windkraftmaschinen leitet.

12. Vorrichtung nach einem der vorstehenden Ansprüche 1 bis 11 dadurch gekennzeichnet, daß entlang den Hochhaussimsen Schaufelwindräder angeordnet sind, die Generatorwellen antreiben.

**Claims**

1. Device (1) for cleaning or keeping clean perpendicular surfaces or surfaces provided with a perpendicular component and being exposed to atmospheric dirt, for example window panes or solar collector surfaces with an electric pump generating the pressure of liquid required for the operation of fluidic nozzles (9) arranged at the upper edge or close to the upper edge of the surfaces, and connected by a piping including the pump, to a liquid source, to supply cleaning sprays directed onto the surfaces, thus marked that the pump is driven by a battery unit which is charged by a current generated by wind energy by means of a wind-driven generator which drives the shaft of a generator and/or by a current generated by solar energy, that the wind-driven machine consists of a holding arrangement (12) rotable around a vertical axis which carries a funnel-shaped wind deflector (13) and a longitudinal shaft (15) for a generator with at least one propeller blade (16) fastened on the drive shaft (15) close to the narrow-cross-section outlet (17) of the wind deflector (13) with the holding arrangement being equipped with a rotary drive controlled by wind-direction sensors and rotating the holding arrangement automatically in a position where the wind deflector (13) with its large-cross-section inlet (18) is turned to the prevailing wind direction.

2. Component according to Claim 1, thus marked that there is at least one solar charger arranged with a battery unit near the surfaces to be cleaned or to be kept cleans to drive the electrically operated pump.

3. Component according to Claim 1, thus marked that the surface to be cleaned or to be kept clean is a window surface or a solar collector surface on the facade of a building wall with the wind-driven generator being admitted by the air stream at the building.

4. Component according to Claim 1, thus marked that the wind-driven generator consists of a holding arrangement rotable around a vertical axis, that carries a funnel-shaped wind deflector and a drive shaft for a generator resting in the longitudinal axis of the wind deflector, with at least one propeller blade fastened on the drive shaft.

5. Component according to Claim 1 and 4, thus marked that the wind deflector is of the Laval nozzle design where, for the wind admission from the wind deflector, at least one propeller blade is arranged near the nozzle outlet.

6. Component according to Claim 4 and 5, thus marked that the propeller blade is designed on the basis of the Propfan technique and that, together with the wind deflector, it forms the propeller/fan driving mechanism.

7. Component according to one of the above Claims 1 to 6, thus marked that several propeller blades are arranged on the shaft at a distance from one another.

8. Component according to Claim 7, thus marked that the propeller blades have the same diameter.

9. Component according to Claim 1 and 4, thus marked that the wind-driven generator is placed on the roof of a high-rise building.

10. Component according to Claim 9, thus marked that one or more wind-driven generators are installed in such a position on the roof of the high-rise building that they are straight in the waste-heat stream of the high-rise building.

11. Component according to Claim 10, thus marked that a stream-guiding equipment is installed on the roof of the high-rise building to guide the waste-heat stream from the high-rise building to the wind-driven generators.

12. Component according to one of the above Claims 1 to 11, thus marked that wind blade wheels are placed along the ledges at the high-rise buildings to drive generator shafts.

**Revendications**

1. Dispositif (1) pour le nettoyage ou la protection contre la pollution des surfaces verticales ou comportant une composante verticale et exposées à la pollution par l'atmosphère, par exemple les vitrages de fenêtres et surfaces de collecteurs solaires, pour lequel la pression du liquide nécessaire à la formation d'un jet de nettoyage dirigé contre les surfaces est délivrée par une pompe électrique reliant par conduite la pompe à une source de liquide et aux buses de distribution du liquide disposées sur l'arête supérieure ou à proximité de l'arête supérieure des surfaces (9), caractérisé par le fait que la pompe est actionnée par une unité à pile, l'unité à pile est chargé par le courant produit par une éolienne actionnant l'arbre d'une génératrice et/ou par énergie solaire, de telle manière que l'éolienne est constituée d'un dispositif de rotation par rapport à l'axe vertical (12) supportant un dispositif de guidage du courant d'air en forme d'entonnoir (13) et un axe longitudinal (15) appartenant à une génératrice avec au moins une pale d'hélice (16) solidaire de l'arbre de transmission (15) à proximité de l'extrémité de sortie de section réduite (17) du dispositif de guidage du courant d'air (13), le dispositif support étant doté d'un mécanisme d'orientation piloté par des capteurs indiquant l'orientation du vent, mécanisme qui place automatiquement le dispositif support dans une position telle que le dispositif de guidage du courant d'air (13) soit positionné avec l'orifice d'entrée de section plus grande (18) dans le sens du vent dominant.

2. Dispositif selon la revendication 1 caractérisé par le fait qu'à proximité des surfaces à nettoyer ou devant être protégées contre la pollution est disposé au moins un générateur solaire relié à une unité de pile pour l'alimentation de la pompe entraînée par énergie électrique.

3. Dispositif selon la revendication 1 caractérisé par le fait que la surface devant être nettoyée ou protégée contre la pollution est une fenêtre ou la surface d'un capteur solaire sur la façade extérieure d'un mur de bâtiment, la machine éolienne étant actionnée par le courant d'air sur la surface du bâtiment.

4. Dispositif selon la revendication 1 caractérisé par le fait que la machine éolienne est constituée d'un dispositif de fixation rotatif par rapport à l'axe vertical, qui porte un dispositif de guidage du courant d'air en forme d'entonnoir et un arbre de transmission dans l'axe longitudinal du dispositif de guidage du courant d'air pour une génératrice avec au moins une pale d'hélice maintenue sur l'arbre de transmission.

5. Dispositif selon la revendication 1 et 4 caractérisé par le fait que le dispositif de guidage du courant d'air est exécuté selon le principe de la tuyère Laval, une pale d'hélice actionnée par le vent du dispositif de guidage du vent étant située à proximité de l'embouchure de la tuyère.

6. Dispositif selon la revendication 4 ou 5, caractérisé par le fait que la pale d'hélice a la forme d'un aéropropulseur et constitue avec le dispositif de guidage du vent un turbopropulseur.

7. Dispositif selon les revendications 1 à 6 ci-dessus, caractérisé par le fait que plusieurs pales d'hélice sont disposées sur l'arbre, espacées les unes par rapport aux autres.

8. Dispositif selon la revendication 7 caractérisé par le fait que les pales d'hélice ont le même diamètre.

9. Dispositif selon la revendication 1 et 4 caractérisé par le fait que la machine éolienne est disposée sur le toit d'un immeuble en hauteur.

10. Dispositif selon la revendication 9 caractérisé par le fait qu'une ou plusieurs machines éoliennes de ce type sont disposées sur le toit d'un immeuble en hauteur de façon à être placées directement dans le flux de l'air chaud sortant de l'immeuble.

11. Dispositif selon la revendication 10 caractérisé par le fait que sur le toit de l'immeuble sont installés des guides de courant d'air qui dirigent le flux d'air chaud sortant du bâtiment contre les machines éoliennes.

12. Dispositif selon l'une des revendications 1 à 11 ci-dessus caractérisé par le fait que le long des corniches de l'immeuble sont disposées des roues à palettes éoliennes qui entraînent les arbres de génératrices.

Fig. 1

Fig. 2

Fig. 3

Fig. 4